# EUROPEAN PATENT SPECIFICATION

(11) **EP 4 049 001 B1**
(45) Date of publication and mention of the grant of the patent: **02.12.2026**
(21) Application number: 20792639.5
(22) Date of filing: 15.10.2020
(51) Int. Cl.: G01N 15/08, B01D 35/30

(54) **TESTING OF FILTRATION DEVICE**
PRÜFUNG EINER FILTERVORRICHTUNG
ESSAI DE DISPOSITIF DE FILTRATION

(30) Priority: 25.10.2019 GB 201915488
(43) Date of publication of application: 31.08.2022
(73) Proprietor: Cytiva Sweden AB, 751 84 Uppsala (SE)
(72) Inventor: MENZEL, Stephan, 41352 Korschenbroich (DE)
(74) Representative: Bedford, Grant Richard
(86) International application number: PCT/EP2020/079026
(87) International publication number: WO 2021/078624

(56) References cited:
- DE-A1- 3 516 341
- US-A1- 2003 078 751
- US-A1- 2012 264 221
- HJ PINCUS ET AL: "Design and Evaluation of a Flow Pump System for Column Testing", ASTM GEOTECHNICAL TESTING JOURNAL, vol. 17, no. 3, 1 January 1994 (1994-01-01), US, pages 269, XP055761203, ISSN: 0149-6115, DOI: 10.1520/GTJ10102J
- QALYOUBI LIYAN ET AL: "Recent progress and challenges on adsorptive membranes for the removal of pollutants from wastewater. Part I: Fundamentals and classification of membranes", CASE STUDIES IN CHEMICAL AND ENVIRONMENTAL ENGINEERING, vol. 3, 1 June 2021 (2021-06-01), pages 100086, XP093136697, ISSN: 2666-0164, DOI: 10.1016/j.cscee.2021.100086
- LUÍS RAIADO PEREIRA ET AL: "Hydrophobic interaction membrane chromatography for plasmid DNA purification: Design and optimization", JOURNAL OF SEPARATION SCIENCE., 19 March 2010 (2010-03-19), DE, pages NA - NA, XP055761214, ISSN: 1615-9306, DOI: 10.1002/jssc.200900844
- LEE R BINK ET AL: "Using In-Line Disposable Pressure Sensors to Evaluate Depth Filter Performance", 28 February 2010 (2010-02-28), XP055760746, Retrieved from the Internet <URL:https://www.pendotech.com/BioProcessIntl_Feb2010.pdf> [retrieved on 20201216]

## Description

### TECHNICAL FIELD OF THE INVENTION

The present invention relates to a system and a method for testing at least one filtration device. It further relates to a filtration device housing.

### BACKGROUND

Screening and testing of filters, for example depth filters can be very time consuming. Various filters with different properties exist and thus many different filters may have to be screened until an appropriate filter is found (see, for example, US 2003/078751 A1). Furthermore low filter capacities or absorption of a given target protein to the filter matrix may result in testing lots of different filters. Furthermore a large volume of filtration feed is needed for the testing both because available filter sizes are big and as explained many filters need to be screened. Various testing and separation methods and components are also known, for example, from US 2012/264221 A1 and Luis Raiado Pereira et al, "Hydrophobic interaction membrane chromatography", Journal of Separation Science, XP55761214.

### SUMMARY

An object of the present invention is to provide an improved method and system for testing and/or screening filtration devices.

A further object of the present invention is to provide a more effective method for testing filtration devices and a system by which a more effective testing of filtration devices can be provided.

This is achieved by a method, a system and a filtration device housing according to the independent claims.

Various aspects and embodiments of the present invention, as defined by the appended claims, are thus provided.

Thereby an effective, and at least in some aspects automated, testing of filtration devices can be provided. The same sample feed can be used for testing a number of filtration devices which can be connected to the chromatography system. All analytics available in the chromatography system can be used for the evaluation of the filtration devices, such as for example pressure sensors and UV sensors which will give valuable information for the evaluation of the filtration devices. Furthermore the chromatography system is possible to sanitize between different screenings. Furthermore the fraction collector of the chromatography system can be used for collecting fractions of the sample feed after having passed the at least one filtration device housing. Hereby further analysis of the sample feed having passed the filtration devices can easily be done and hereby further analysis of the filtration device features and filtration device performance can be performed.

### BRIEF DESCRIPTION OF THE DRAWINGS

Figure 1a shows schematically a system for testing at least one filtration device according to one embodiment of the invention.
Figure 1b shows the same system as showed in Figure 1a but in another position where a buffer is flushed through the at least one filtration device before the testing takes place.
Figure 2 shows schematically a sample loop provided in the chromatography system according to one embodiment of the invention.
Figure 3a shows schematically a filtration device housing according to one embodiment of the invention.
Figure 3b shows schematically a filtration device housing according to another embodiment of the invention.
Figure 4 is a flow chart of a method for testing at least one filtration device according to one embodiment of the invention.
Figure 5a is a diagram showing delta column pressure for different types of filtration devices when tested according to the invention.
Figure 5b is a diagram showing both delta column pressure and UV absorption for one of the filtration devices when tested according to the invention.
Figure 6 shows schematically a system for testing filtration devices according to another embodiment of the invention.

### DETAILED DESCRIPTION OF EMBODIMENTS

According to the invention a method is provided for testing at least one filtration device, where the method comprises using a chromatography system for the testing. The method is defined by independent claim 12 and the system is defined by independent claim 1.

By using an already existing chromatography system for screening and testing of different filtration devices, such as for example depth filters, sterile filters, chromatography media or a combination of such filter types, an effective method is provided for the evaluation of different filter properties. Analytic components already provided in the chromatography system can be used for the evaluation, such as pressure sensors for evaluating a delta pressure over the filtration devices and UV sensors for measuring UV absorbance of the sample feed flowed through the filtration devices. Hereby an effective and to some degree automated testing method for filtration devices is provided.

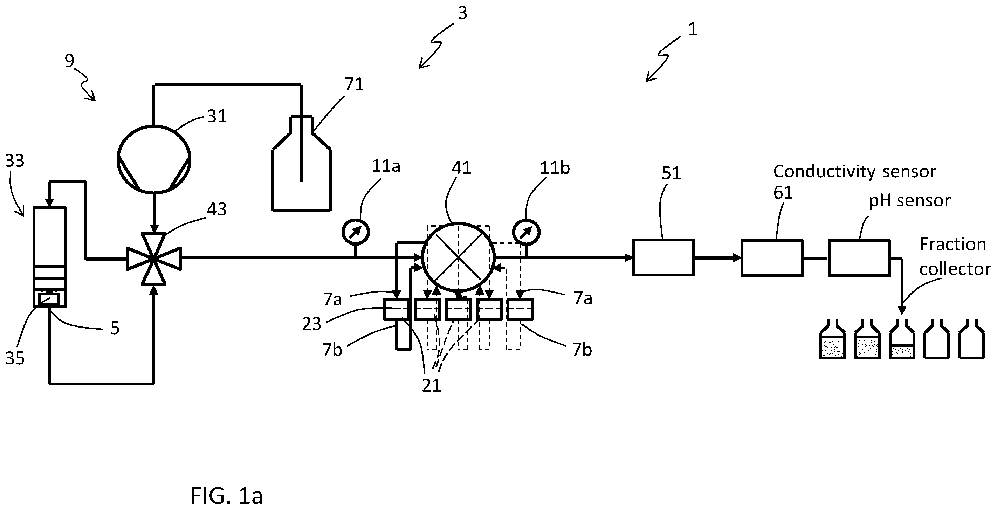

Figure 1a shows schematically a system 1 for testing at least one filtration device 23 according to one embodiment of the invention. The system 1 comprises a chromatography system 3 comprising at least one pair of inlet and outlet chromatography column connections 7a, 7b for at least one chromatography column. A number of pairs of inlet and outlet chromatography column connections 7a, 7b can be provided in the chromatography system 3 for allowing connection of a number of chromatography columns. According to the invention the system 1 comprises also at least one filtration device housing 21 comprising a filtration device 23 to be tested. Each filtration device housing 21 is connected to one of the at least one pair of inlet and outlet chromatography column connections 7a, 7b instead of a chromatography column in the chromatography system 3, i.e. at the positions of the chromatography system 3 where chromatography columns can be connected one or more filtration device houses 21 are connected instead. Hereby the chromatography system and all its analytical functions, such as for example pressure sensors and UV sensors can be used for evaluating properties of different filtration devices in a screening process for testing filtration devices. Hereby an effective and to some extent automated method and system for testing filtration devices is achieved. Furthermore the same sample feed can be used in a convenient way for the testing of different filtration devices which will give a robust and reliable testing method. Even further the chromatography system 3 can be easily sanitized between different tests.

The chromatography system 3 comprises in this embodiment a sample feed inlet 5 and a pump system 9 for pumping sample feed through possibly connected chromatography columns, or in this case through connected filtration device housings 21. The chromatography system 3 comprises furthermore pressure sensors 11a, 11b which are configured for measuring pressures at an inlet side and an outlet side of a connected chromatography column, or as in this case connected filtration device housings 21.

The filtration device comprises one or more of a depth filter, a sterile filter and a chromatography media. Hereby different types of depth filters or sterile filters can be tested according to the invention. Another possibility is to test different chromatography media, for example functionalized chromatography media or a combination of for example a depth filter and a functionalized chromatography media. The chromatography media could be any suitable type such as resin, membrane or nanofibre adsorbent (e.g. as disclosed in EP3055059B1).

The filtration device is suitably provided having a small effective area compared to the size of conventionally available filters. Testing smaller filters is favorable as less material is required for the filtration and thus more filtration devices differing in their properties can be tested. An effective area of the filtration devices 23 can in one embodiment of the invention for example be smaller than 3 cm² and in another embodiment of the invention smaller than 2 cm² or even smaller than 1 cm².

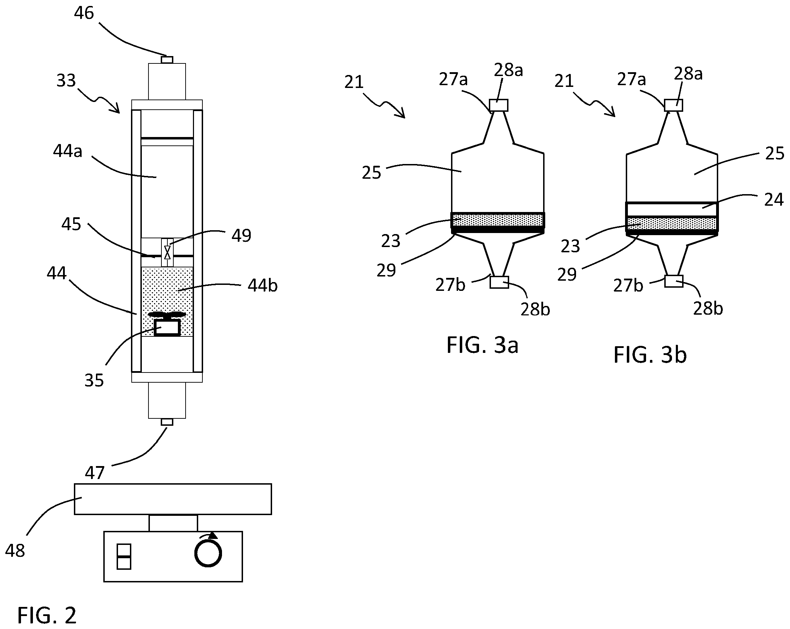

The pump system 9 comprises in this embodiment of the invention a pump 31 and a sample loop 33. The sample loop 33 is shown schematically in more detail in Figure 2. The sample loop 33 comprises a housing 44 which comprises a pump fluid compartment 44a and a sample feed compartment 44b which are separated from each other by a plunger 45 provided in the housing 44. The pump fluid compartment 44a comprises a pump fluid inlet 46 which can be connected to the pump 31. Hereby pump fluid can be pumped into the pump fluid compartment 44a by the pump 31. The plunger 45 constitutes a sealed separation wall between the pump fluid compartment 44a and the sample feed compartment 44b and can slide inside the housing 44 thereby changing the sizes of the pump fluid compartment and the sample feed compartment. The plunger 45 can in some embodiments comprise a valve 49 to prevent overpressure when stopped by allowing a flow from the pump fluid compartment 44a into the sample feed compartment 44b.

The sample feed compartment 44b comprises a sample feed outlet 47 which is connected to the sample feed inlet 5 of the chromatography system 3, whereby the plunger 45 can be moved by the pump 31 such that sample feed provided in the sample feed compartment 44b is pushed out through the sample feed outlet 47 without any contact with the pump fluid. Hereby a sample feed compartment 44b is provided which is separated from the pump fluid but still controlled by the pump. Hereby system contact with the sample feed is limited. In another embodiment of the invention no sample loop 33 is provided but the pump system 9 comprises instead a diaphragm pump with a disposable pump head. This would be an alternative way of limiting system contact of the sample feed.

In this embodiment of the invention the sample feed compartment 44b of said sample loop 33 comprises a magnetically driven stirring device 35. The pump system 9 of the chromatography system 3 comprises furthermore in this embodiment a magnetic stirrer 48 configured for magnetically controlling a stirring motion of the magnetically driven stirring device 35. Stirring the sample feed is advantageous in order to ensure a homogenous distribution of particles in the sample feed to be provided to the filtration devices to be tested.

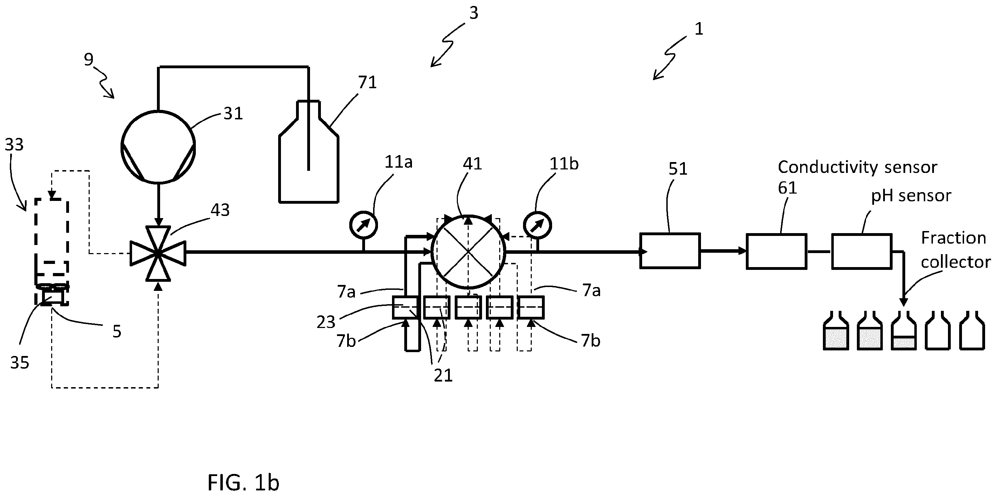

The chromatography system 3 further comprises one or more column valves 41 for controlling the sample feed through any connected chromatography columns one after each other. However, in the system 1 according to the invention filtration device housings 21 are connected via the column valve 41 instead for chromatography columns. Said column valve 41 can be set in different flow control positions allowing reversing of the flow direction through said connected filtration device housings 21. A reversed flow through the filtration device housings 21 is shown in Figure 1b which will be further described below.

The chromatography system 3 comprises suitably also at least one UV detector 51 configured for measuring UV absorbance of the sample feed after having passed through the filtration device housing 21. The chromatography system 3 may also comprise a conductivity sensor 52a and a pH sensor 52b. Furthermore the chromatography system 3 may comprise a fraction collector 61 for collecting fractions of the sample feed after having passed the at least one filtration device housing 21. This can be suitable if further analysis of the sample feed having passed the filtration devices is needed for evaluation of filtration device properties. Hereby many functions which are already provided in a conventional chromatography system can be used for the testing and screening of filtration devices.

The chromatography system 3 further comprises an injection valve 43 connected to the sample feed inlet 5 and connectable to a buffer source 71. Said injection valve 43 can be positioned for flushing buffer through the at least one filtration device housing 21 or for providing sample feed through the at least one filtration device housing.

Figure 1b shows the same system as showed in Figure 1a where the column valve 41 and the injection valve 43 are provided in other positions compared to Figure 1a and a buffer is flushed through the at least one filtration device. Such a flushing with buffer can suitably be provided before the testing of the filtration devices 23 by use of sample feed takes place. The flushing is hereby suitably performed in an opposite direction over the filtration devices as compared to when sample feed is transferred through the filtration devices. By using the reverse flow, air which may be contained in the filtration device can be replaced by liquid (often washing buffer). This can be important as it is very difficult to remove air above the filtration device in a regular (top-to-bottom) flow direction.

Two different embodiments of a filtration device housing 21 are schematically shown in more detail in Figures 3a and 3b. Most of the features are common for both the embodiments and are given the same reference numbers. The filtration device housing 21 is configured for being connectable to a chromatography system 3, where said filtration device housing 21 is configured for connection to a chromatography system 3 at a chromatography column position, i.e. to a pair of inlet and outlet chromatography column connections 7a, 7b of the chromatography system 3. The filtration device housing 21 comprises a filtration device 23 which should be tested. The filtration device can be for example a depth filter, a sterile filter or a functionalized chromatography media or a combination of those as described above. The filtration device housing 21 further comprises an inlet 27a configured for receiving sample feed into the filtration device housing 23 for passing through the filtration device 23, said inlet 27a being provided with a first connection 28a configured for being connectable to an inlet chromatography column connection 7a of a chromatography system 3. The filtration device housing 21 comprises also an outlet 27b configured for transferring sample feed out from the filtration device housing 21 after having passed through the filtration device 23, said outlet 27b being provided with a second connection 28b configured for being connectable to an outlet chromatography column connection 7b of a chromatography system 3. A distance ring 29 can in some embodiments be provided between the outlet 27b and the filtration device 23. The distance ring 29 can be configured for avoiding displacement of the filtration device 23 within the filtration device housing 21 and for avoiding that the filtration device is pressed against the bottom of the filtration device housing 21.

The filtration device housing 21 further comprises a housing part 25 in which the filtration device 23 is provided, whereby the filtration device 23 has an outer circumference which fits closely inside the housing part 25. The housing part 25 can be cylindrical, whereby also the filtration device 23 has a cylindrical form having substantially the same diameter as an inner diameter of the cylindrical housing part 25. However also other geometries of the housing part 25 and the filtration device 23 than cylindrical are possible.

The filtration device 23 is suitably small as discussed above, for example an effective area of the filtration device can be smaller than 3 cm² or smaller than 2 cm².

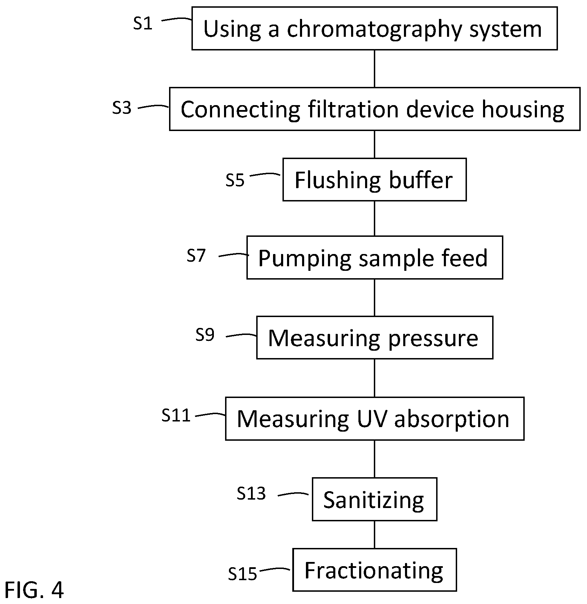

Figure 4 is a flow chart of a method for testing at least one filtration device according to one embodiment of the invention. The method steps are described in order below:
S1: Using a chromatography system 3 for the testing.
S3: Connecting at least one filtration device housing 21 comprising a filtration device 23 to be tested, to the chromatography system 3 at a position intended for a chromatography column in the chromatography system.
S5: Flushing a buffer through the filtration device housing 21 before pumping sample feed through the filtration device housing 21. This step is optional.
S7: Pumping sample feed through the at least one filtration device housing 21.
S9: Measuring pressure in the sample feed before and after the at least one filtration device housing 21.

In some embodiments of the invention the method further comprises one or more of the optional steps:
S11: Measuring UV absorption of the sample feed after having passed the at least one filtration device housing 21.
S13: Sanitizing the chromatography system 3 between different tests of filtration devices 23.
S15: Fractionating the sample feed after having passed the at least one filtration device housing 21.

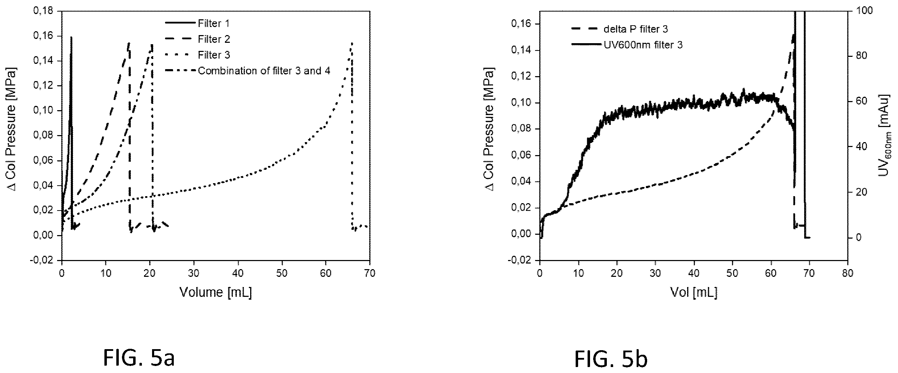

Figures 5a and 5b are diagrams showing some experimental data from testing of filtration devices according to one embodiment of the invention. Figure 5a is a diagram showing delta column pressure for four different types of filtration devices 23 when tested according to the invention. Figure 5b is a diagram showing both delta column pressure and UV absorption for one of the filtration devices 23 when tested according to the invention.

Figure 5a shows delta column pressure measured during the filtration process of CHO cell culture supernatant using different depth filter types with increasing particle retention ratings from filter 1 (EKMP), 2 (K200) and 3 (K700). As maximum a pressure of 0.16 MPa was set where the depth filtration process was automatically aborted by the chromatography system; here defined as filtration volume. The figure shows that the filtration volume increases as expected with increasing retention rating and that different depth filter types can clearly be distinguished from each other. A combination of filter 2 and 3 is illustrated as dash dot dotted line indicating, that the addition of a suitable layer with higher retention rating can increase the filtration volume compared to the single depth filter 2. The depth filter area of the tested devices was 0.79 cm².

Figure 5b shows delta column pressure on the left y-axis and absorbance at 600nm on the right y-axis measured during the filtration process of CHO cell culture using filter 3 (see figure 5a). This figure illustrates the filtration process of a filter material where the retention rating was chosen too high. The increase in UV600nm signal indicates that particles are able to pass the filter. As the pressure continuously increases with increasing filtration volume a filter cake is built up. This filter cake gets dense enough to also retain particles which is indicated by a decreasing UV600nm signal at a filtration volume of approximately 60 mL. The depth filter area of the tested device was 0.79 cm².

According to another embodiment of the invention a method for testing filtration devices by using a liquid handling station 55 is provided. I.e. instead of using a chromatography system a liquid handling station is used for the testing. Hereby a number of filtration devices, such as for example depth filters, sterile filters or chromatography material or a combination of those as discussed above, can be effectively tested in parallel. The sample feed can hereby be provided in parallel from the liquid handling station 55 to the filtration devices.

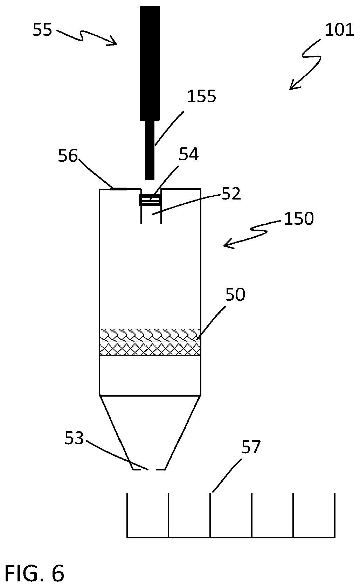

Figure 6 shows schematically a system 101 for testing filtration devices 50 according to such an embodiment of the invention. This system 101 comprises a liquid handling station 55 and a number of filtration device housings 150. The filtration device housings 150 can be provided in the form of small tubes in which the filtration devices 50 are provided, one filtration device 50 in each filtration device housing 150. The filtration device housing 150 comprises an inlet 52 and outlet 53 between which the filtration device 50 is provided. Liquid e.g. buffer or feed can be provided at the inlet 52 of the filtration device housing 150 using a liquid handling station 55. A sealing 54 (e.g. an O-ring) is provided at the inlet 52 where a needle 155 of the liquid handling station 55 can penetrate into the filtration device housing 150 for delivering the sample feed. The sealing 54 prevents leakage at the inlet 52 with increasing pressure. To remove air during a possible initial flushing step a valve 56 (e.g. a hydrophobic membrane) can be provided at a top part of the filtration device housing 150. This valve 56 closes when it is soaked with liquid and also serves as a rupture disc which breaks when a maximum backpressure of the filtration device 50 is reached. The occurring leakage after rupture disc breaking can be drained by a channel. Fractions can be taken automatically by the liquid handling robot in microtiter plates 57.

## Claims

1. A system (1) for testing at least one filtration device, said system comprising:
a chromatography system (3) comprising at least one pair of inlet and outlet chromatography column connections (7a, 7b) for connection to at least one chromatography column; and
at least one filtration device housing (21) comprising a filtration device (23) to be tested, whereby the, or each, filtration device housing (21) is connected to one of the at least one pair of inlet and outlet chromatography column connections (7a, 7b) instead of a chromatography column in the chromatography system; and
**characterised in that**:
said chromatography system (3) further comprises a sample feed inlet (5), a pump system (9) for pumping sample feed through at least one chromatography column and the, or each, connected filtration device housing (21) and pressure sensors (11a, 11b) configured for measuring pressures at an inlet side and an outlet side thereof,
wherein:
a) said filtration device (23) comprises one or more of a depth filter, a sterile filter and a chromatography media; and
b) a distance ring (29) is provided between an outlet (27b) of the filtration device housing (21) and the filtration device (23).

2. The system (1) according to any one of the preceding claims, wherein an effective area of said filtration device (23) is smaller than 3 cm² or smaller than 2 cm².

3. The system (1) according to any one of the preceding claims, wherein the pump system (9) comprises a pump (31) and a sample loop (33), wherein said sample loop (33) comprises a housing (44) comprising a pump fluid compartment (44a) and a sample feed compartment (44b) which are separated from each other by a plunger (45) provided in the housing (44), wherein said pump fluid compartment (44a) comprises a pump fluid inlet (46) which can be connected to the pump (31) and said sample feed compartment (44b) comprises a sample feed outlet (47) which is connected to the sample feed inlet (5) of the chromatography system, whereby the plunger (45) can be moved by the pump (31) such that sample feed provided in the sample feed compartment (44b) is pushed out through the sample feed outlet (47) without any contact with the pump fluid.

4. The system (1) according to claim 3, wherein said sample feed compartment (44b) of said sample loop (33) comprises a magnetically driven stirring device (35).

5. The system (1) according to any one of the preceding claims, wherein the system comprises more than one filtration device housings (21) and wherein the chromatography system (3) further comprises one or more valves (41) for controlling the sample feed through the connected filtration device housings (21) one after each other.

6. The system (1) according to claim 5, wherein said valve (41) can be set in different flow control positions allowing reversing of the flow direction through said connected filtration device housings (21).

7. The system (1) according to any one of the preceding claims, wherein the chromatography system (3) further comprises at least one UV detector (51) configured for measuring UV absorbance of the sample feed after having passed through the filtration device housing (21).

8. The system (1) according to any one of the preceding claims, wherein the chromatography system (3) further comprises a fraction collector (61) for collecting fractions of the sample feed after having passed the at least one filtration device housing (21).

9. The system (1) according to any one of the preceding claims, wherein the filtration device housing (21) comprises a depth filter or a functionalized chromatography media or a combination of those.

10. The system (1) according to any one of the preceding claims, wherein the at least one filtration device housing (21) comprises:
a housing part (25) in which the filtration device (23) is provided, whereby the filtration device (23) has an outer circumference which fits closely inside the housing part (25);
an inlet (27a) configured for receiving sample feed into the cylindrical housing part (25); and
an outlet (27b) configured for transferring sample feed out from the cylindrical housing part (25) after having passed through the filtration device (23).

11. The system (1) according to any one of the preceding claims, wherein the chromatography system (3) further comprises an injection valve (43) connected to the sample feed inlet (5) and connectable to a buffer source (71), whereby said injection valve (43) can be positioned for flushing buffer through the at least one filtration device housing (21) or for providing sample feed through the at least one filtration device housing.

12. A method for testing at least one filtration device (23), said method using the system according to any preceding claim for testing a filtration device, said method comprising the steps of:
pumping (S7) sample feed through the at least one filtration device housing (21); and
measuring (S9) pressure in the sample feed before and after the at least one filtration device housing (21).

13. The method according to claim 12, further comprising:
i) flushing (S5) a buffer through the filtration device housing (21) before pumping sample feed through the filtration device housing (21);
ii) measuring (S11) UV absorption of the sample feed after having passed the at least one filtration device housing (21);
iii) sanitizing (S13) the chromatography system (3) between different tests of filtration devices (23);
iv) fractionating (S15) the sample feed after having passed the at least one filtration device housing (21); and/or
v) wherein the method is a method for testing filtration devices having an effective area smaller than 3 cm² or smaller than 2 cm².

## Patentansprüche

1. System (1) zum Prüfen mindestens einer Filtervorrichtung, wobei das System Folgendes umfasst:
ein Chromatographiesystem (3), das mindestens ein Paar von Chromatographiesäulen-Einlass- und -Auslassanschlüssen (7a, 7b) zur Verbindung mit mindestens einer Chromatographiesäule umfasst; und
mindestens ein Filtervorrichtungsgehäuse (21), das eine zu prüfende Filtervorrichtung (23) umfasst, wobei das oder jedes Filtervorrichtungsgehäuse (21) mit einem des mindestens einen Paars von Chromatographiesäulen-Einlass- und - Auslassanschlüssen (7a, 7b) anstatt einer Chromatographiesäule im Chromatographiesystem verbunden ist; und
**dadurch gekennzeichnet, dass**:
das Chromatographiesystem (3) weiter einen Probenzuführungseinlass (5), ein Pumpsystem (9) zum Pumpen der Probenzuführung durch mindestens eine Chromatographiesäule und das oder jedes verbundene Filtervorrichtungsgehäuse (21) und Drucksensoren (11a, 11b), die zum Messen von Drücken an einer Einlassseite und einer Auslassseite davon ausgebildet sind, umfasst, wobei:
a) die Filtervorrichtung (23) einen oder mehrere von einem Tiefenfilter, einem sterilen Filter und einem Chromatographiemedium umfasst; und
b) ein Abstandsring (29) zwischen einem Auslass (27b) des Filtervorrichtungsgehäuses (21) und der Filtervorrichtung (23) bereitgestellt ist.

2. System (1) nach einem der vorstehenden Ansprüche, wobei eine Wirkfläche der Filtervorrichtung (23) kleiner als 3 cm² oder kleiner als 2 cm² ist.

3. System (1) nach einem der vorstehenden Ansprüche, wobei das Pumpsystem (9) eine Pumpe (31) und eine Probenschleife (33) umfasst, wobei die Probenschleife (33) ein Gehäuse (44) umfasst, das ein Pumpenfluidfach (44a) und ein Probenzuführungsfach (44b) umfasst, die durch einen im Gehäuse (44) bereitgestellten Kolben (45) voneinander getrennt sind, wobei das Pumpenfluidfach (44a) einen Pumpenfluideinlass (46) umfasst, der mit der Pumpe (31) verbunden werden kann, und das Probenzuführungsfach (44b) einen Probenzuführungsauslass (47) umfasst, der mit dem Probenzuführungseinlass (5) des Chromatographiesystems verbunden ist, wobei der Kolben (45) von der Pumpe (31) derart bewegt werden kann, dass eine im Probenzuführungsfach (44b) bereitgestellte Probenzuführung durch den Probenzuführungsauslass (47) ohne jeglichen Kontakt mit dem Pumpenfluid herausgestoßen wird.

4. System (1) nach Anspruch 3, wobei das Probenzuführungsfach (44b) der Probenschleife (33) eine magnetisch angetriebene Rührvorrichtung (35) umfasst.

5. System (1) nach einem der vorstehenden Ansprüche, wobei das System mehr als ein Filtervorrichtungsgehäuse (21) umfasst und wobei das Chromatographiesystem (3) weiter ein oder mehrere Ventile (41) zum Steuern der Probenzuführung durch die verbundenen Filtervorrichtungsgehäuse (21) nacheinander umfasst.

6. System (1) nach Anspruch 5, wobei das Ventil (41) in unterschiedlichen Strömungssteuerpositionen eingestellt werden kann, die ermöglichen, die Strömungsrichtung durch die verbundenen Filtervorrichtungsgehäuse (21) umzukehren.

7. System (1) nach einem der vorstehenden Ansprüche, wobei das Chromatographiesystem (3) weiter mindestens einen UV-Detektor (51) umfasst, der zum Messen von UV-Absorbanz der Probenzuführung nach deren Durchgang durch das Filtervorrichtungsgehäuse (21) ausgebildet ist.

8. System (1) nach einem der vorstehenden Ansprüche, wobei das Chromatographiesystem (3) weiter einen Fraktionssammler (61) zum Sammeln von Fraktionen der Probenzuführung nach deren Durchgang durch das mindestens eine Filtervorrichtungsgehäuse (21) umfasst.

9. System (1) nach einem der vorstehenden Ansprüche, wobei das Filtervorrichtungsgehäuse (21) einen Tiefenfilter oder ein funktionalisiertes Chromatographiemedium oder eine Kombination davon umfasst.

10. System (1) nach einem der vorstehenden Ansprüche, wobei das mindestens eine Filtervorrichtungsgehäuse (21) Folgendes umfasst:
ein Gehäuseteil (25), in dem die Filtervorrichtung (23) bereitgestellt ist, wobei die Filtervorrichtung (23) einen Außenumfang aufweist, der genau in das Innere des Gehäuseteils (25) passt;
einen Einlass (27a), der zum Aufnehmen einer Probenzuführung in das zylinderförmige Gehäuseteil (25) ausgebildet ist; und
einen Auslass (27b), der zum Befördern einer Probenzuführung aus dem zylinderförmigen Gehäuseteil (25) nach deren Durchgang durch die Filtervorrichtung (23) ausgebildet ist.

11. System (1) nach einem der vorstehenden Ansprüche, wobei das Chromatographiesystem (3) weiter ein Einspritzventil (43) umfasst, das mit dem Probenzuführungseinlass (5) verbunden ist und mit einer Pufferquelle (71) verbindbar ist, wobei das Einspritzventil (43) so positioniert werden kann, dass Puffer durch das mindestens eine Filtervorrichtungsgehäuse (21) gespült wird oder eine Probenzuführung durch das mindestens eine Filtervorrichtungsgehäuse bereitgestellt wird.

12. Verfahren zur Prüfung mindestens einer Filtervorrichtung (23), wobei das Verfahren das System nach einem vorstehenden Anspruch zur Prüfung einer Filtervorrichtung verwendet, wobei das Verfahren die folgenden Schritte umfasst:
Pumpen (S7) einer Probenzuführung durch das mindestens eine Filtervorrichtungsgehäuse (21); und
Messen (S9) des Drucks in der Probenzuführung vor und nach dem mindestens einen Filtervorrichtungsgehäuse (21).

13. Verfahren nach Anspruch 12, weiter umfassend:
i) Spülen (S5) eines Puffers durch das Filtervorrichtungsgehäuse (21) vor dem Pumpen der Probenzuführung durch das Filtervorrichtungsgehäuse (21);
ii) Messen (S11) der UV-Absorption der Probenzuführung nach deren Durchgang durch das mindestens eine Filtervorrichtungsgehäuse (21);
iii) Desinfizieren (S13) des Chromatographiesystems (3) zwischen unterschiedlichen Prüfungen der Filtervorrichtungen (23);
iv) Fraktionieren (S15) der Probenzuführung nach deren Durchgang durch das mindestens eine Filtervorrichtungsgehäuse (21); und/oder
v) wobei das Verfahren ein Verfahren zur Prüfung von Filtervorrichtungen ist, die eine Wirkfläche aufweisen, die kleiner als 3 cm² oder kleiner als 2 cm² ist.

## Revendications

1. Système (1) pour tester au moins un dispositif de filtration, ledit système comprenant :
un système de chromatographie (3) comprenant au moins une paire de raccords (7a, 7b) d'entrée et de sortie de colonne de chromatographie pour le raccordement à au moins une colonne de chromatographie ; et
au moins un boîtier (21) de dispositif de filtration comprenant un dispositif de filtration (23) à tester, de telle sorte que le, ou chaque, boîtier (21) de dispositif de filtration est raccordé à l'un de l'au moins une paire de raccords (7a, 7b) d'entrée et de sortie de colonne de chromatographie au lieu d'une colonne de chromatographie dans le système de chromatographie ; et
**caractérisé en ce que** :
ledit système de chromatographie (3) comprend en outre une entrée (5) d'échantillon, un système de pompage (9) pour pomper l'échantillon à travers au moins une colonne de chromatographie et le, ou chaque, boîtier (21) de dispositif de filtration raccordé et des capteurs de pression (11a, 11b) configurés pour mesurer des pressions sur un côté d'entrée et un côté de sortie de celui-ci, dans lequel :
a) ledit dispositif de filtration (23) comprend un ou plusieurs parmi un filtre en profondeur, un filtre stérilisant et un support de chromatographie ; et
b) un anneau d'espacement (29) est prévu entre une sortie (27b) du boîtier (21) de dispositif de filtration et le dispositif de filtration (23).

2. Système (1) selon l'une quelconque des revendications précédentes, dans lequel une surface effective dudit dispositif de filtration (23) est plus petite que 3 cm² ou plus petite que 2 cm².

3. Système (1) selon l'une quelconque des revendications précédentes, dans lequel le système de pompage (9) comprend une pompe (31) et une boucle d'échantillonnage (33), dans lequel ladite boucle d'échantillonnage (33) comprend un boîtier (44) comprenant un compartiment (44a) de fluide de pompe et un compartiment (44b) d'échantillon qui sont séparés l'un de l'autre par un piston (45) prévu dans le boîtier (44), dans lequel ledit compartiment (44a) de fluide de pompe comprend une entrée (46) de fluide de pompe qui peut être raccordée à la pompe (31) et ledit compartiment (44b) d'échantillon comprend une sortie (47) d'échantillon qui est raccordée à l'entrée (5) d'échantillon du système de chromatographie, de telle sorte que le piston (45) peut être déplacé par la pompe (31) de telle sorte que l'échantillon prévu dans le compartiment (44b) d'échantillon est poussé vers l'extérieur à travers la sortie (47) d'échantillon sans aucun contact avec le fluide de pompe.

4. Système (1) selon la revendication 3, dans lequel ledit compartiment (44b) d'échantillon de ladite boucle d'échantillonnage (33) comprend un dispositif d'agitation (35) entraîné magnétiquement.

5. Système (1) selon l'une quelconque des revendications précédentes, dans lequel le système comprend plus d'un boîtier (21) de dispositif de filtration et dans lequel le système de chromatographie (3) comprend en outre une ou plusieurs vannes (41) pour commander l'échantillon à travers les boîtiers (21) de dispositif de filtration raccordés l'un après l'autre.

6. Système (1) selon la revendication 5, dans lequel ladite vanne (41) peut être réglée dans différentes positions de commande d'écoulement permettant l'inversion du sens d'écoulement à travers lesdits boîtiers (21) de dispositif de filtration raccordés.

7. Système (1) selon l'une quelconque des revendications précédentes, dans lequel le système de chromatographie (3) comprend en outre au moins un détecteur UV (51) configuré pour mesurer l'absorbance UV de l'échantillon après être passé à travers le boîtier (21) de dispositif de filtration.

8. Système (1) selon l'une quelconque des revendications précédentes, dans lequel le système de chromatographie (3) comprend en outre un collecteur (61) de fractions pour collecter des fractions de l'échantillon après avoir traversé l'au moins un boîtier (21) de dispositif de filtration.

9. Système (1) selon l'une quelconque des revendications précédentes, dans lequel le boîtier (21) de dispositif de filtration comprend un filtre en profondeur ou un support de chromatographie fonctionnalisé ou une combinaison de ceux-ci.

10. Système (1) selon l'une quelconque des revendications précédentes, dans lequel l'au moins un boîtier (21) de dispositif de filtration comprend :
une partie (25) de boîtier dans laquelle le dispositif de filtration (23) est prévu, de telle sorte que le dispositif de filtration (23) présente une circonférence extérieure qui s'ajuste étroitement à l'intérieur de la partie (25) de boîtier ;
une entrée (27a) configurée pour recevoir l'échantillon dans la partie (25) de boîtier cylindrique ; et
une sortie (27b) configurée pour transférer l'échantillon hors de la partie (25) de boîtier cylindrique après être passé à travers le dispositif de filtration (23).

11. Système (1) selon l'une quelconque des revendications précédentes, dans lequel le système de chromatographie (3) comprend en outre une vanne d'injection (43) raccordée à l'entrée (5) d'échantillon et raccordable à une source (71) de tampon, de telle sorte que ladite vanne d'injection (43) peut être positionnée pour rincer du tampon à travers l'au moins un boîtier (21) de dispositif de filtration ou pour fournir l'échantillon à travers l'au moins un boîtier de dispositif de filtration.

12. Procédé pour tester au moins un dispositif de filtration (23), ledit procédé utilisant le système selon une quelconque revendication précédente pour tester un dispositif de filtration, ledit procédé comprenant les étapes de :
pompage (S7) de l'échantillon à travers l'au moins un boîtier (21) de dispositif de filtration ; et
mesure (S9) de la pression dans l'échantillon en amont et en aval de l'au moins un boîtier (21) de dispositif de filtration.

13. Procédé selon la revendication 12, comprenant en outre :
i) le rinçage (S5) d'un tampon à travers le boîtier (21) de dispositif de filtration avant de pomper l'échantillon à travers le boîtier (21) de dispositif de filtration ;
ii) la mesure (S11) de l'absorption UV de l'échantillon après avoir traversé l'au moins un boîtier (21) de dispositif de filtration ;
iii) l'assainissement (S13) du système de chromatographie (3) entre différents essais de dispositifs de filtration (23) ;
iv) le fractionnement (S15) de l'échantillon après avoir traversé l'au moins un boîtier (21) de dispositif de filtration ; et/ou
v) dans lequel le procédé est un procédé pour tester des dispositifs de filtration présentant une surface effective plus petite que 3 cm² ou plus petite que 2 cm².
